# FASCICULE DE BREVET EUROPEEN

(11) **EP 0 480 505 B1**
(45) Date de publication et mention de la délivrance du brevet: **22.07.1998**
(21) Numéro de dépôt: 91202543.4
(22) Date de dépôt: 01.10.1991
(51) Int. Cl.: H04B 7/26, H04Q 7/22

(54) **Système de transmission radioélectrique comportant une pluralité de dispositifs d'abonné**
Funkübertragungssystem mit einer Anzahl von Teilnehmerendgeräten
Radiotransmission system with a plurality of subscriber devices

(30) Priorité: 09.10.1990 FR 9012416
(43) Date de publication de la demande: 15.04.1992
(73) Titulaire: Philips Electronics N.V., 5621 BA Eindhoven (NL)
(72) Inventeur: Travers, Jean-François, Société Civile S.P.I.D., F-75008 Paris (FR); Briand, Jacques, Société Civile S.P.I.D., F-75008 Paris (FR); Guedes, Yvon, Société Civile S.P.I.D., F-75008 Paris (FR)
(74) Mandataire: Chaffraix, Jean

(56) Documents cités:
- EP-A- 0 209 185
- EP-A- 0 334 746
- EP-B- 0 261 127
- 39TH IEEE VEHICULAR TECHNOLOGY CONFERENCE vol. II, Mai 1989, SAN-FRANCISCO (US) pages 712 - 717; A. MALOBERTI: 'RADIO TRANSMISSION INTERFACE OF THE DIGITAL PANEUROPEAN MOBILE SYSTEM'
- * page 714, colonne de droite, ligne 58 - ligne 77 *
- INTERNATIONAL SWITCHING SYMPOSIUM vol. 3, Mars 1987, PHOENIX (US) pages 759 - 765; P. ROBERT ET AL: 'ALCATEL LAND MOBILE SYSTEM CD900 A FULLY DIGITAL CELLULAR APPROACH USING WIDEBAND TDMA'

## Description

La présente invention concerne un système de transmission comportant une pluralité de dispositifs d'abonné rattachés à au moins deux stations d'émission-réception échangeant des informations au moyen d'une voie radioélectrique, selon un mode de multiplexage temporel qui est formé de séries de T intervalles de temps de trafic à affecter à un certain nombre de canaux et d'un intervalle de temps de contrôle situé entre ces séries d'intervalles de temps.

Un tel système trouve d'importantes applications notamment dans le système de transmission utilisant les liaisons radioélectriques.

Un premier système connu de ce genre est décrit dans la publication :
39^{th} IEEE VEHICULAR TECHNOLOGY CONFERENCE "RADIO TRANSMISSION INTERFACE OF THE DIGITAL PANEUROPEAN MOBILE SYSTEM" paru en mai 1989, pages 712-717.
Dans ce système, les intervalles de temps du multiplex peuvent être utilisés de deux façons seulement : soit pour transmettre des informations à un débit rapide (Full rate) soit pour les transmettre à un demi-débit (Half rate). Il n'est pas fait mention dans ce document d'utiliser un nombre quelconque de canaux.

Un deuxième système connu de ce genre est décrit dans la publication :
INTERNATIONAL SWITCHING SYMPOSIUM "ALCATEL LAND MOBILE SYSTEM CD900 A FULLY DIGITAL CELLULAR APPROACH USING WIDEBAND TDMA" paru en mars 1987, pages 759-765.
Dans ce système, différents intervalles de temps sont affectés à un des canaux pour s'adapter au trafic à écouler.

Tous ces systèmes présentent l'inconvénient que, lorsque les stations mobiles émettent, elles sont incapables de recevoir. On est alors confronté avec le risque de ne pas recevoir du tout les informations émises périodiquement par la base lorsqu'elles correspondent dans le temps avec l'émission des stations mobiles selon la même période. La gestion du système peut alors présenter de graves défaillances.

Un système de transmission comportant une pluralité de dispositifs d'abonné rattachés à au moins deux stations d'émission-réception échangeant des informations au moyen d'un multiplex temporel transmis par voie radioélectrique, multiplex temporel dans lequel sont prévues des séries de T intervalles de temps de trafic à affecter à un nombre variable C de canaux dépendant du nombre et du type de dispositifs d'abonné à raccorder, est décrit dans le brevet européen EP-B-0 261 127. Bien que ce système apporte des avantages en ce qui concerne ses possibilités d'adaptation aux différents codeurs-décodeurs de paroles disponibles sur le marché en affectant un nombre convenable d'intervalles de temps pour chaque canal, on estime cependant que ce système connu n'offre pas une bonne gestion de l'utilisation de ses canaux.

La présente invention propose un système du genre mentionné dans le préambule qui atténue dans une large mesure cet inconvénient.

Pour cela, un tel système est remarquable en ce que le certain nombre de canaux dont la valeur C est inférieure ou égale à un nombre C_{MAX} est variable et dépend du nombre et du type de dispositifs d'abonné à raccorder et en ce que T est choisi pour que tous les canaux précèdent directement, ou succèdent directement à, l'intervalle de temps de contrôle une fois sur C.

La description suivante en regard des dessins annexés, le tout donné à titre d'exemple non limitatif, fera bien comprendre comment l'invention peut être réalisée.

La figure 1 montre un système de transmission conforme à l'invention.

La figure 2 montre le schéma d'une station dite de base.

La figure 3 montre le schéma d'une station satellite.

La figure 4 montre l'encombrement spectral des canaux fréquentiels utilisés par le système.

La figure 5 montre l'organisation du multiplex.

La figure 6 montre comment est inséré l'intervalle de temps de contrôle conformément à l'invention.

La figure 7 montre d'une autre manière comment est inséré l'intervalle de temps de contrôle conformément à l'invention.

La figure 8 montre comment est effectuée une liaison du type full-duplex et du type half-duplex.

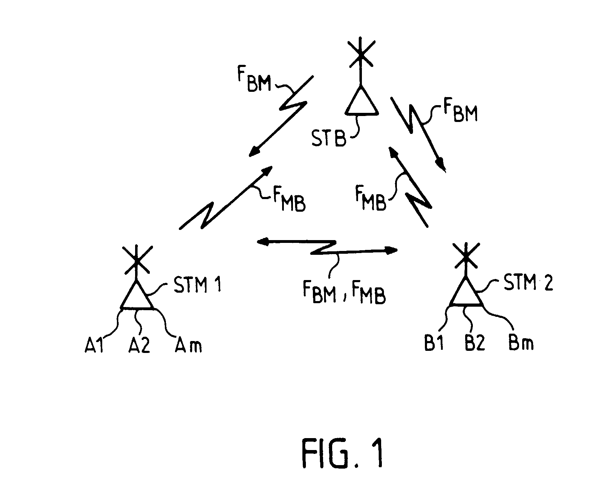

A la figure 1, on a représenté un système conforme à l'invention. Ce système est formé d'un ensemble de stations d'émission-réception STB, STM1 et STM2. Il va de soi que le nombre des stations peut être quelconque. STB est une station d'émission-réception de base, STM1 et STM2 sont des stations satellites, c'est-à-dire gérées par la station de base. En pratique la station de base est un poste fixe tandis que les stations STM1 et STM2 sont des stations portables ou embarquées dans des mobiles. A la station mobile STM1 sont rattachés une pluralité de dispositifs d'abonné A1, A2, ..., Am et à la station mobile STM2 une pluralité de dispositifs d'abonnés B1, B2, ..., Bn. Les stations communiquent entre elles par des liaisons radioélectriques qui utilisent deux canaux fréquentiels FBM et FMB.

En général le canal F_{BM} est emprunté par les communications allant de la base STB vers les mobiles STM1 et STM2 et le canal F_{MB} par les communications allant des stations mobiles vers la base. Les communications établies sur ces canaux fréquentiels sont organisées selon un multiplex temporel du type TDMA procurant des voies de communication appelées dans la suite canaux temporels.

Pour bien comprendre l'intérêt de l'invention, il est utile de rappeler quelques notions.

Il faut, en effet, distinguer mode de communication et type de communication.

Le mode de communication est dit duplex lorsque la communication entre deux abonnés des stations STM1 et STM2 respectivement passe par la station de base STB. On utilise dans ce cas les deux canaux fréquentiels, le canal F_{MB} appelé aussi canal montant le canal F_{BM} appelé, lui, canal descendant.

Le mode de communication est dit simplex lorsque la communication a lieu directement entre les deux stations mobiles.

Le type de communication est dit duplex (ou full-duplex) si les abonnés des stations mobiles peuvent émettre ou recevoir (parler ou écouter) en même temps, ceci est réalisé, par exemple dans le cadre de cette invention, par partage temporel (c'est-à-dire un intervalle de temps pour parler et un autre intervalle pour écouter).

Le type de communication est dit half-duplex si les abonnés des stations ne peuvent qu'émettre ou recevoir dans le même temps.

Comme les dispositifs d'abonnés peuvent avoir des formats de données à recevoir ou à transmettre différents, les trames TDMA peuvent consacrer des canaux temporels à plus ou moins d'intervalles de temps d'une manière qui sera explicitée par la suite.

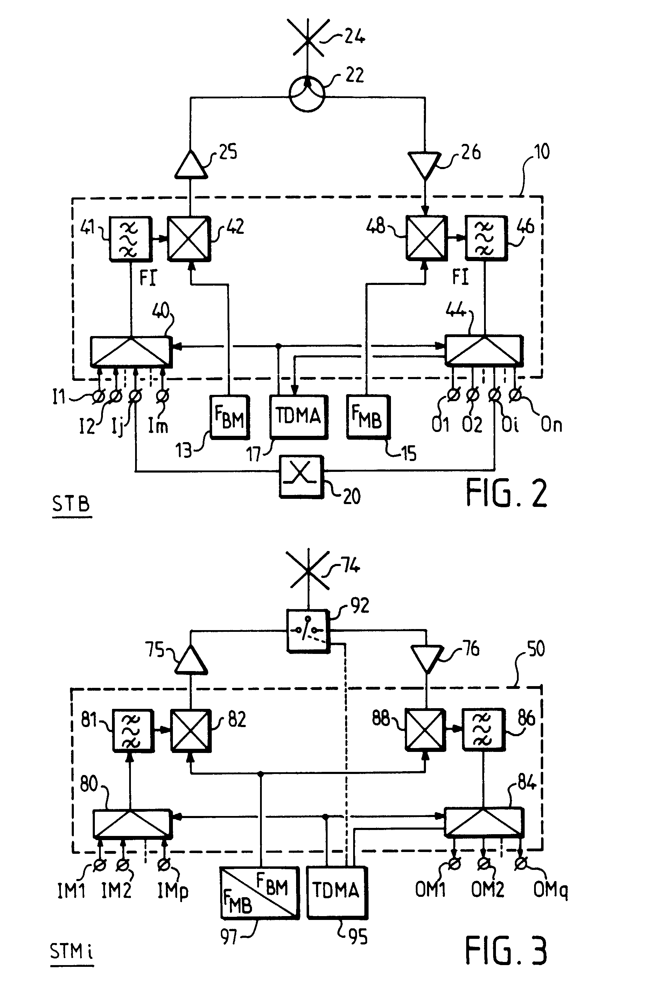

La figure 2 est un schéma synoptique de la station de base STB.

Elle est composée d'un ensemble d'émission-réception 10 piloté par deux oscillateurs de référence 13 et 15 oscillant aux fréquences F_{MB} et F_{BM}. Cet ensemble crée une trame TDMA au moyen d'un générateur de trames 17. Des dispositifs d'abonné, ou d'autres liaisons, peuvent être connectés à des accès d'entrée I1, I2, ..., Im et à des accès de sortie O1, O2, ..., On. Un organe de connexion 20 reliant les sorties 0i aux entrées Ij permet d'établir des communications entre mobiles passant par la base (mode duplex). Un filtre duplexeur (coupleur) 22 permet, sur une même antenne 24, à la fois d'émettre sur une fréquence F_{MB} et de recevoir sur une fréquence F_{BM}, différente de F_{MB}. A ce coupleur 22 sont connectés un amplificateur d'émission 25 et de réception 26.

L'ensemble 10 est formé d'une partie émission 40 coopérant avec un filtre 41, centré sur une fréquence intermédiaire FI, et un modulateur 42. Le modulateur 42 centre sur la fréquence porteuse, fixée par l'oscillateur 13, les informations fournies par la partie 40. La partie 40 arrange les informations à transmettre selon les commandes établies par le générateur de trame TDMA 17, module les informations en phase, fréquence ou amplitude sur une fréquence intermédiaire FI. Ce générateur de trame 17 permet aussi de récupérer les différentes informations contenues dans la trame TDMA reçue par un ensemble de réception 44. L'entrée de cet ensemble est reliée à la sortie d'un filtre 46, centré sur la fréquence FI, connecté à la sortie d'un démodulateur 48. Ce démodulateur 48 reçoit les signaux de l'amplificateur 26 et de l'oscillateur 15. Les sorties O1, ..., On, sont constituées par les sorties de l'ensemble 44.

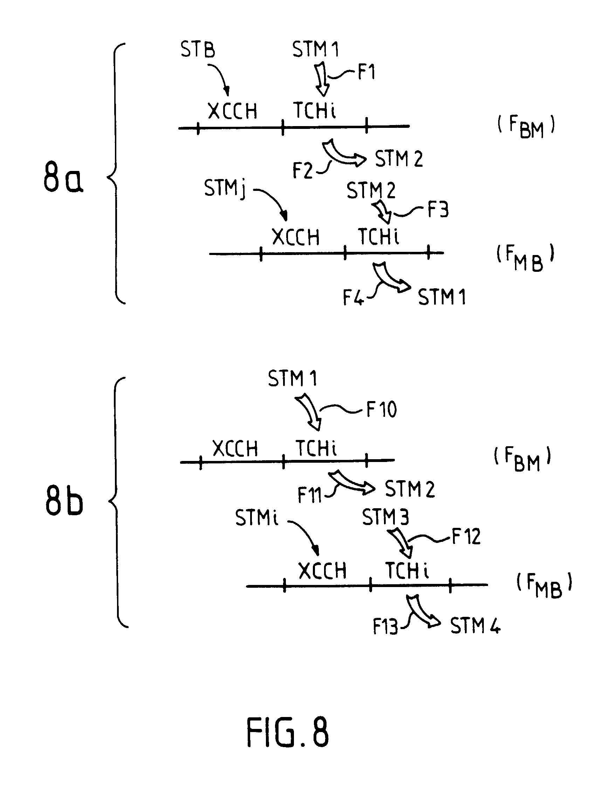

Le schéma synoptique d'une des stations dites mobiles STMi est montré à la figure 3. Cette station est formée d'une manière similaire à celle de la station de base en ce qui concerne les éléments 74, 75, 76, 50, 80, 81, 82, 84, 86, 88 qui sont à rapprocher des éléments 24, 25, 26, 10, 40, 41, 42, 44, 46, 48 de la figure 2. Les différences portent sur le couplage à l'antenne, l'oscillateur de référence et le générateur de trame :
- Le couplage d'antenne est réalisé par un commutateur (à diodes) 92 commandé par le générateur de trames 95 suivant que l'on émet ou reçoit. On utilise un commutateur à la place d'un filtre duplexeur pour des raisons de coût des mobiles ; les communications de type duplex sont réalisées par partage temporel (un intervalle de temps sur F_{MB} pour émettre et un autre intervalle de temps pour recevoir sur F_{BM}). Ceci sera mieux expliqué par la suite, lors de la description de la figure 8.
- L'oscillateur de référence 97 peut générer des fréquences égales à F_{MB} pour l'émission (F_{BM} pour la réception) en mode de communication duplex et F_{MB} ou F_{BM} pour l'émission (F_{BM} ou F_{MB} pour la réception) en mode de communication simplex. Le changement de fréquences est rendu possible par un synthétiseur de fréquence capable de générer des fréquences égales à F_{BM} ou F_{MB} et constituant le générateur 97.
- Le générateur de trame TDMA 95 commande à la fois les parties 80 et 84 mais aussi le choix des fréquences F_{BM} et F_{MB} et le commutateur 92 de l'antenne.

Les accès d'entrée pour le dispositif d'abonné portent les références IM1, IM2, ..., IMp et les accès de sortie les références OM1, OM2, ..., OMq.

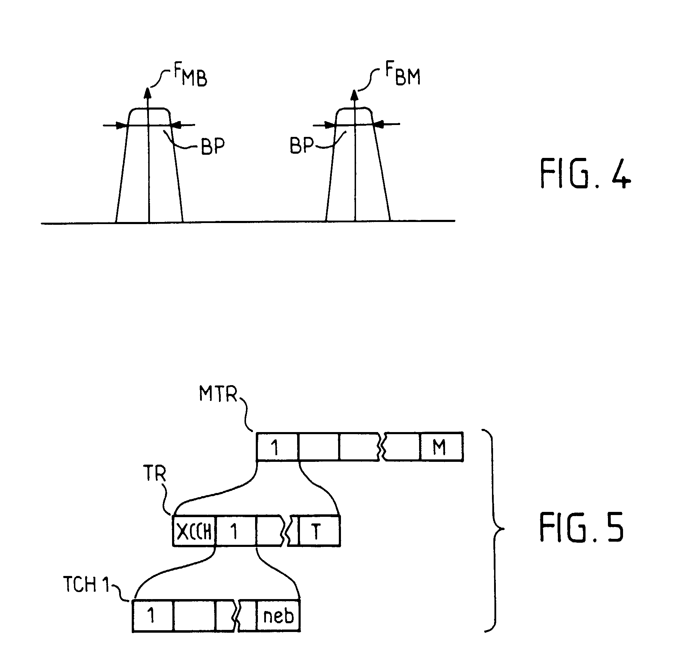

A la figure 4, on a représenté les canaux fréquentiels, centrés autour des fréquences porteuses F_{MB} et F_{BM}, utilisés comme support de trames TDMA.

La bande passante BP autour de ces fréquences porteuses est de 25 kHz. Les fréquences porteuses sont comprises approximativement dans la bande 400 MHz-900 MHz.

La figure 5 montre l'organisation de ce multiplex TDMA. Il est composé d'une multitrame MTR formée de M trames TR composées à leur tour, chacune, d'une part de T intervalles de temps TCHi (i = 1, ..., T) et d'autre part d'un intervalle de temps XCCH. L'intervalle XCCH est utilisé pour l'organisation du multiplex tandis que les intervalles TCHi le sont pour transmettre le trafic utile. Chacun de ces intervalles TCH₁ à TCH_{T} comporte n_{eb} éléments binaires.

Dans le cadre de l'exemple décrit le multiplex doit s'adapter à différents codeurs et décodeurs de paroles rattachés aux abonnés et à différents appareils de transmission de données à des débits différents. Ces codeurs-décodeurs travaillent avec des débits de 2,4 keb/s, ..., 13 keb/s. Le multiplex doit pouvoir alors offrir C canaux temporels C = 1, ..., C_{MAX}, C_{MAX} = 6, avec :
- M =: 60 trames par multitrame,
- T =: 19 intervalles de temps TCH par trame, soit 20 intervalles de temps au total avec l'intervalle XCCH,
- n_{eb} =: 190 éléments binaires dont 46 servent à la récupération des 144 éléments binaires de trafic et à la gestion de la communication (synchronisation, état de l'abonné -décroché ou raccoché...).

Dans le cadre de l'exemple décrit, avec 200 intervalles de temps de trafic utile transmis en 1 seconde, l'ensemble des canaux de trafic dispose de 28,8 keb/s.

M est choisi tel que c'est le ppcm (plus petit commun multiple) des nombres 1 à C_{MAX}.

La valeur T est un nombre premier pour tous les nombres compris entre 1 et C_{MAX}.

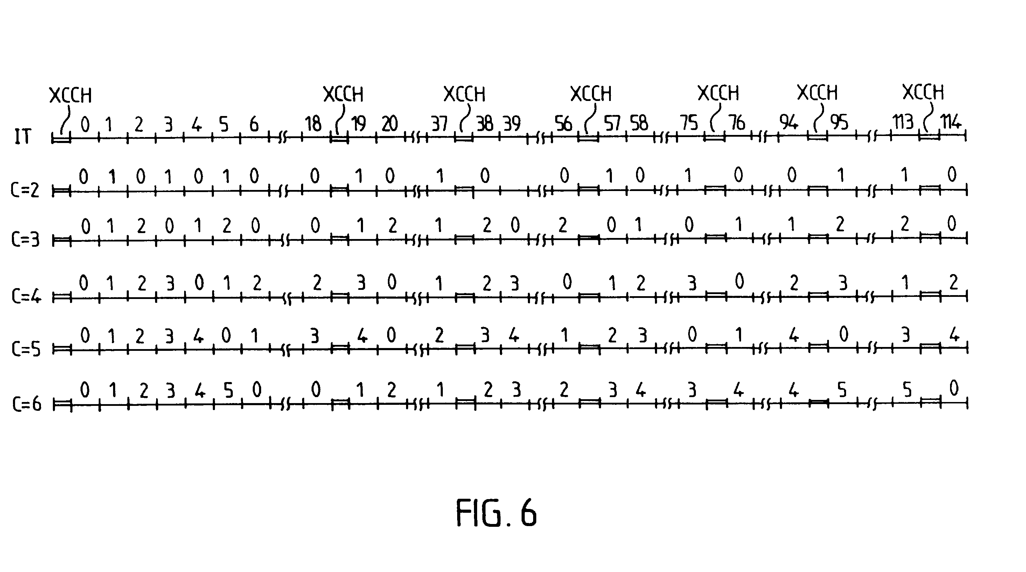

Ainsi on obtient un glissement ou une rotation des canaux autour de l'intervalle de temps XCCH ; c'est-à-dire que tous les canaux doivent précéder directement le (ou succéder directement au) canal XCCH une fois sur C. Ceci est représenté à la figure 6 pour C = 2, ..., 6.

Bien que dans cet exemple la valeur T soit égale à 19, d'autres valeurs peuvent convenir, par exemple T = 7, 11, ..., 23,... La valeur T est finalement fixée par le débit que l'on veut offrir au canal de contrôle XCCH et au rendement du débit du canal XCCH par rapport au débit global. De manière préférentielle l'intervalle de temps XCCH a un nombre d'éléments binaires égal aussi à n_{eb} ce qui facilite les opérations de synchronisation.

Sur cette figure, on a repéré les différents intervalles de temps IT par une numérotation continue ne tenant pas compte des trames. Les intervalles de temps XCCH sont représentés par un double trait.

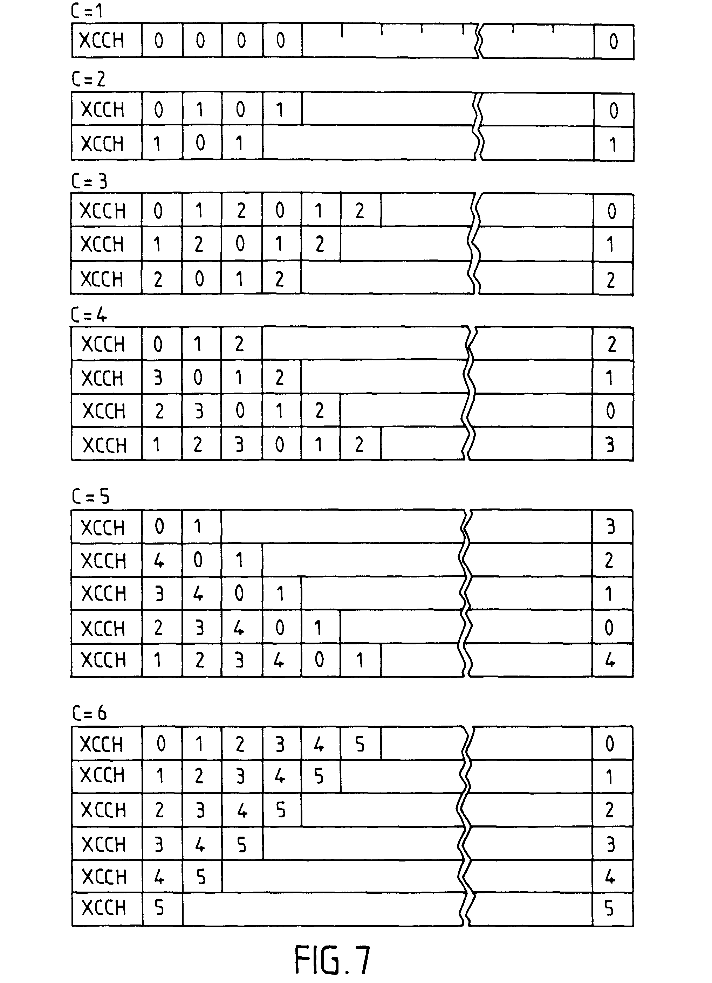

La figure 7 montre ce glissement d'une autre manière.

Grâce à ce glissement chaque canal est sûr de recevoir les informations émises par la base sur XCCH (F_{BM}), ceci une fois sur C, et d'émettre en direction de la base sur XCCH (F_{MB}) une fois sur C (figure 8).

En effet, les intervalles de temps XCCH étant décalés, le mobile émettant vers la base dans l'intervalle de temps TCH (F_{MB}), simultanément à un intervalle de temps XCCH (F_{BM}) n'est pas en mesure de recevoir les informations provenant de cet intervalle de temps XCCH (F_{BM}). Le mobile peut cependant émettre sur l'intervalle de temps suivant, c'est-à-dire XCCH (F_{MB}).

De la même façon, tout mobile devant recevoir l'intervalle de temps TCH (F_{BM}), suivant l'intervalle de temps XCCH (F_{BM}) de la base, n'est pas en mesure d'émettre sur le canal XCCH (F_{MB}). Il a pu cependant recevoir les informations émises par la base sur l'intervalle de temps XCCH (F_{BM}).

Ainsi le glissement des canaux par rapport à l'intervalle de temps XCCH permet à un instant de recevoir les informations émises par la base (XCCH sur F_{BM}) et à un autre instant d'émettre des informations en direction de la base (XCCH sur F_{MB}).

L'intervalle de temps XCCH peut trouver d'importantes applications.

Ainsi il permet une communication en mode simplex sans passer par la base. Ceci est rendu possible si la base, sur la fréquence descendante F_{BM} laisse 1 ou 2 intervalles de temps libres, c'est-à-dire qu'elle n'émet pas sur cet intervalle, et qu'elle réserve 1 ou 2 intervalles de temps sur la fréquence montante F_{MB}. Cela dit, les mobiles doivent rester synchronisés sur la base afin de ne pas déborder sur les intervalles de temps voisins. Ceci est rendu possible si la base est sûre d'émettre sur quelques intervalles de temps, ces derniers sont les intervalles de temps XCCH (F_{BM}) servant à la fois d'intervalle de temps de resynchronisation et de canal de contrôle. Ces intervalles de temps de contrôle sont aussi utilisés pour la synchronisation des communications simplex.

Ce cas est schématisé sur la figure 8 où l'on a représenté l'intervalle de temps XCCH. Dans cet intervalle de temps la station STB peut émettre aux mobiles sur le multiplex TDMA transmis par la fréquence F_{BM} et elle peut recevoir des informations provenant du multiplex TDMA transmis par la fréquence F_{MB}.

Les intervalles de temps TCHi affectés aux mobiles en communication simplex permettent plus ou moins de communications en fonction de leur type :
- pour le full duplex (figure 8a) sur un intervalle de temps TCHi, le mobile STM1 émet sur FBM, flèche F1, tandis que le mobile STM2, flèche F2, écoute sur la même fréquence, et réciproquement sur un autre intervalle de temps le mobile STM2 émet sur FMB, flèche F3, tandis que STM1 écoute sur cette même fréquence, flèche F4.
- pour le half duplex (figure 8b) sur un intervalle de temps TCHi, le mobile STM1 émet sur FBM, flèche F10, en direction de STM2, flèche F11, et sur un autre intervalle de temps le mobile STM3 émet sur FMB, flèche F12, en direction de STM4, flèche F13. On a ainsi augmenté dans un facteur 2 la capacité du canal RF à partir d'une même trame TDMA.

## Revendications

1. Système de transmission comportant une pluralité de dispositifs d'abonné (Ai, Bi) rattachés à au moins deux stations d'émission-réception (STM1, STM2) échangeant des informations au moyen d'une voie radioélectrique, selon un mode de multiplexage temporel qui est formé de séries de T intervalles de temps de trafic à affecter à un certain nombre de canaux et d'un intervalle de temps de contrôle (XCCH) situé entre ces séries d'intervalles de temps, caractérisé en ce que le certain nombre de canaux dont la valeur C est inférieure ou égale à un nombre C_{MAX} est variable et dépend du nombre et du type de dispositifs d'abonné à raccorder et en ce que T est choisi pour que tous les canaux précèdent directement, ou succèdent directement à, l'intervalle de temps de contrôle (XCCH) une fois sur C.

2. Système de transmission selon la revendication 1, caractérisé en ce que chaque série de T intervalles de temps de trafic et un intervalle de temps de contrôle (XCCH) contigu à la série constitue une trame (TR) et en ce que ces trames sont organisées en multitrames (MTR) comportant M trames, M étant le plus petit commun multiple des nombres 1, ... C_{MAX}.

3. Système de transmission selon l'une des revendications 1 ou 2 comportant une première station d'émission-réception dite station de base (STB) et au moins deux stations d'émission-réception dites stations mobiles (STM1, STM2), caractérisé en ce que les informations sont transmises directement par les stations mobiles dans les intervalles de temps de trafic, tandis que les informations de contrôle pour l'établissement et les informations de contrôle pour la fin des communications sont transmises de et vers la station de base (STB) dans les intervalles de temps de contrôle (XCCH).

4. Système de transmission selon l'une des revendications 1 à 3, comprenant une première station d'émission-réception dite station de base (STB) et au moins deux stations d'émission-réception dites stations mobiles (STMA, STM2), caractérisé en ce que l'intervalle de temps de contrôle (XCCH) peut être utilisé pour des communications en mode simplex, c'est-à-dire de station mobile à station mobile sans passer par la station de base pour la transmission d'informations, ces communications étant synchronisées et sous le contrôle de la station de base dans un même intervalle de temps de contrôle (XCCH), la station de base gérant dans ce cas uniquement l'établissement, la coupure de communication et la distribution des fréquences et intervalles de temps.

## Patentansprüche

1. Übertragungssystem mit einer Vielzahl Teilnehmerendgeräten (Ai, Bi), verbunden mit mindestens zwei Sende-Empfangs-Stationen (STM1, STM2), die Informationen per Funkübertragung austauschen, nach einem Zeitmultiplex-Modus, gebildet aus Serien von T Übertragungs-Zeitintervallen, die einer bestimmten Anzahl Kanäle zuzuteilen sind, und einem Kontroll-Zeitintervall (XCCH), das sich zwischen den Zeitintervall-Serien befindet, dadurch gekennzeichnet, daß die bestimmte Anzahl Kanäle, deren Wert C kleiner oder gleich einer Zahl C_{MAX} ist, variabel ist und von der Anzahl und dem Typ der anzuschließenden Teilnehmerendeinrichtungen abhängt, und daß T gewählt wird, damit die Kanäle direkt dem Kontroll-Zeitintervall (XCCH) vorangehen oder nachfolgen, einmal auf C.

2. Übertragungssystem nach Anspruch 1, dadurch gekennzeichnet, daß jede Serie zu T Verkehrs-Zeitintervallen und einem Kontroll-Zeitintervall (XCCH), an die Serie angrenzend, ein Raster (TR) bildet, und daß diese Raster in Multiraster (MTR) mit M Rastern organisiert sind, wobei M das kleinste gemeinsame Vielfache der Zahlen 1, ... C_{MAX} ist.

3. Übertragungssystem nach einem der Ansprüche 1 oder 2, mit einer ersten Sende-Empfangs-Station, der sogenannten Basisstation (STB), und mindestens zwei Sende-Empfangs-Stationen, den sogenannten mobilen Stationen (STM1, STM2), dadurch gekennzeichnet, daß die Informationen direkt über die mobilen Stationen in den Verkehrs-Zeitintervallen übertragen werden, während die Kontroll-Informationen zum Aufbau und die Kontroll-Informationen zum Beenden der Kommunikationen in den Kontroll-Zeitintervallen (XCCH) von und zur Basisstation (STB) übertragen werden.

4. Übertragungssystem nach einem der Ansprüche 1 bis 3, mit einer Sende-Empfangs-Station, der sogenannten Basisstation (STB), und mindestens zwei Sende-Empfangs-Stationen, den sogenannten mobilen Stationen (STM1, STM2), dadurch gekennzeichnet, daß das Kontroll-Zeitintervall (XCCH) für Kommunikationen in Simplex-Modus verwendet werden kann, d.h. zur Übertragung von Informationen von mobiler Station zu mobiler Station, ohne über die Basisstation zu verlaufen, diese Kommunikationen werden unter der Kontrolle der Basisstation in einem selben Kontroll-Zeitintervall (XCCH) synchronisiert, wobei die Basisstation in diesem Fall nur den Aufbau und das Beenden der Kommunikation und die Vergabe der Frequenzen und Zeitintervalle verwaltet.

## Claims

1. A transmission system comprising a plurality of subscriber devices (Aᵢ - Bᵢ) connected to at least two transceiver stations (STM1, STM2) which exchange data over a radio channel in a time-division multiplex mode in which series of T traffic time intervals occur which are to be allocated to a certain number of channels, and a control time interval (XCCH) situated between these series of time intervals, characterized in that the certain number of channels whose value C is less than or equal to a number C_{MAX} is variable and depends on the number and type of subscriber devices to be connected, and in that T is selected so that all the channels directly precede (or directly succeed) the control time interval (XCCH) once per C.

2. A transmission system as claimed in claim 1, characterized in that each series of T traffic time intervals and one control time interval (XCCH) contiguous to the series forms a frame (TR) and in that these frames are organised in multiframes (MTR) containing M frames, where M is the lowest common multiple of numbers 1, ..., C_{MAX}.

3. A transmission system as claimed in one of the claims 1 or 2, comprising a first transceiver station called base station (STB) and at least two transceiver stations called mobile stations (STM1, STM2), characterized in that the data are transmitted directly by the mobile stations in traffic time intervals, whereas the control data for setting up and terminating communications are transmitted to and from the base station (STB) in control time intervals (XCCH).

4. A transmission system as claimed in one of the Claims 1 to 3, comprising a first transceiver station termed base station (STB) and at least two transceiver stations termed mobile stations (STM1, STM2), characterized in that the control time interval (XCCH) can be used for communications in the half-duplex mode, that is to say, for transmitting data from mobile station to mobile station without the intervention of the base station, these communications being synchronized with and under the control of the base station in a same control time interval XCCH, the base station in this case managing establishing or terminating the communication and the distribution of the frequencies and time intervals.
